# EUROPÄISCHE PATENTSCHRIFT

(11) **EP 2 188 026 B1**
(45) Veröffentlichungstag und Bekanntmachung des Hinweises auf die Patenterteilung: **04.04.2018**
(21) Anmeldenummer: 08758947.9
(22) Anmeldetag: 02.06.2008
(51) Int. Cl.: C01B 33/148, C09C 1/30, B01D 5/00

(54) **VERFAHREN ZUM ENTFERNEN SAURER VERBINDUNGEN AUS EINER LÖSUNGSMITTELHALTIGEN METALLOXIDDISPERSION**
METHOD FOR THE REMOVAL OF ACIDIC COMPOUNDS FROM A SOLVENT-CONTAINING METAL OXIDE DISPERSION
PROCÉDÉ D'ÉLIMINATION DE COMPOSÉS ACIDES D'UNE DISPERSION D'OXYDE MÉTALLIQUE CONTENANT UN SOLVANT

(30) Priorität: 30.07.2007 EP 07014927
(43) Veröffentlichungstag der Anmeldung: 26.05.2010
(73) Patentinhaber: Evonik Degussa GmbH, 45128 Essen (DE)
(72) Erfinder: KÜHNER, Uwe, Dietrich, 20457 Hamburg (DE); GRAALMANN, Onno, 21502 Geesthacht (DE)
(74) Vertreter: Glawe, Delfs, Moll
(86) Internationale Anmeldenummer: PCT/EP2008/004379
(87) Internationale Veröffentlichungsnummer: WO 2009/015717

(56) Entgegenhaltungen:
- EP-A- 0 401 631
- WO-A-01/52618
- JP-A- 2004 091 220
- US-A- 4 139 420
- US-A- 5 487 816
- US-A1- 2005 020 699
- US-B1- 6 384 125

## Beschreibung

Die Erfindung betrifft ein Verfahren zum Entfernen saurer Verbindungen aus einer lösungsmittelhaltigen Metalloxiddispersion.

Metalloxidpartikel wie bspw. Siliciumdioxidpartikel, insbesondere nanoskalige Siliciumdioxidpartikel, werden als Füllstoffe in verschiedenen Polymermaterialien verwendet, um deren mechanische Eigenschaften zu verbessern. Es ist beispielsweise bekannt, aus einer Kieselsäurelösung durch Ansäuern ein sogenanntes Kieselsol herzustellen, bei dem nanoskalige Siliciumdioxidpartikel kolloidal in Lösung verteilt sind.
Es ist bekannt, Siliciumdioxidpartikel an ihrer Oberfläche zu modifizieren, um deren Einbindung in eine Polymermatrix zu erleichtern. Beispielsweise kann eine Oberflächensilanisierung durchgeführt werden. Als Reagenz zur Durchführung der Oberflächensilanisierung können beispielsweise Halogensilane verwendet werden. Bei dieser Reaktion werden die entsprechenden Halogenwasserstoffe bzw. Halogenwasserstoffsäuren frei, die sich nachteilig auf die Eigenschaften eines mit dem silanisierten Füllstoff hergestellten Polymers auswirken können und/oder korrosiv auf Gebinde und Anlagen einwirken können.

US 6,384,125 B1 offenbart ein Verfahren zum Herstellen eines modifizierten SiO2-Füllstoffs, bei dem die Oberfläche zunächst sauer funktionalisiert wird und dann mit einem Neutralisationsmittel behandelt wird.

JP 2004 091220 A offenbart ein Verfahren zum Herstellen von hochreinem Kieselsol dispergiert in hydrophilen organischen Lösungsmitteln.
Der Erfindung liegt die Aufgabe zugrunde, eine vorteilhafte Möglichkeit zum Entfernen saurer Verbindungen aus Metalloxiddispersionen, insbesondere nanoskaligen Siliciumdioxiddispersionen zur Verfügung zu stellen.
Das erfindungsgemäße Verfahren weist folgende Schritte auf:
a) Überführen von Lösungsmittel in die Gasphase;
b) Kondensierenlassen des Lösungsmittels;
c) In Kontakt bringen des kondensierten Lösungsmittels mit einem Neutralisationsmedium, das räumlich von der Metalloxiddispersion getrennt ist;
d) Rückführen des kondensierten Lösungsmittels in die Metalloxiddispersion;
wobei das Lösungsmittel ein nicht mit Wasser mischbares organisches Lösungsmittel ist und das Metalloxid ausgewählt ist aus der Gruppe bestehend aus Metalloxiden der 3. und 4. Hauptgruppe, Übergangsmetalloxiden, Oxiden der Lanthanoiden und Actinoiden. Zunächst seien einige im Rahmen der Erfindung verwendete Begriffe erläutert.

Der Begriff lösungsmittelhaltige Metalloxiddispersion bezeichnet Dispersionen von Metalloxidpartikeln, insbesondere nanoskaligen Metalloxidpartikeln, in einem Lösungsmittel.

Im Rahmen der Erfindung umfasst der Begriff Metalloxid auch Siliciumdioxid.

Bei dem erfindungsgemäß bevorzugten lösungsmittelhaltigen Kieselsol handelt es sich um Dispersionen von Siliciumdioxidpartikeln, insbesondere nanoskaligen Siliciumdioxidpartikeln, in einem Lösungsmittel. Es kann sich beispielsweise um durch Ansäuern von Kieselsäurelösungen gewonnene Kieselsole handeln, der Begriff ist aber nicht auf diese Art der Gewinnung beschränkt. Saure Verbindungen im Sinne der Erfindung sind bevorzugt Verbindungen, die sich mit dem Lösungsmittel ausschleppen lassen, beispielsweise flüchtige Verbindungen oder solche Verbindungen, die mit dem Lösungsmittel beispielsweise ein Azeotrop bilden oder auf andere Weise ausgeschleppt werden.
Im Rahmen der Erfindung wird das Lösungsmittel der Dispersion bzw. ein Teil davon zunächst in die Gasphase überführt. Dies kann beispielsweise durch Erhitzen bei Atmosphärendruck oder vermindertem Druck geschehen.
Die Gasphase wird anschließend wieder kondensiert und das kondensierte Lösungsmittel mit einem Neutralisationsmedium in Kontakt gebracht. Das kondensierte und neutralisierte Lösungsmittel wird anschließend wieder zu der Metalloxiddispersion zurückgeführt. Das erfindungsgemäße Verfahren lässt sich insbesondere durch Erhitzen unter Rückfluss durchführen, wobei der Rückfluss über das Neutralisationsmedium erfolgt.
Bei der vorliegenden Erfindung ist das Neutralisationsmedium räumlich von der Metalloxiddispersion getrennt. Da nur das rücklaufende Lösungsmittel damit in Kontakt kommt, ist eine Kontamination der Metalloxidpartikel, insbesondere Siliciumdioxidpartikel selbst mit dem Neutralisationsmedium ausgeschlossen. Die räumliche Trennung von Dispersion und Neutralisationsmedium hat produktionstechnische Vorteile, da diese Trennung eine kontinuierliche Durchführung des Neutralisationsprozesses erleichtert. Das Neutralisationsmedium kann bspw. in einem kontinuierlichen Prozess aufgefrischt oder erneuert werden, was bei einer chargenweise direkten Neutralisation der Dispersion nicht möglich ist.
Die Erfindung hat erkannt, dass die im Stand der Technik beispielsweise aus US 6,384,125 B1 bekannte direkte Neutralisation eines Kieselsols nachteilig ist. Die Siliciumdioxidpartikel gelangen bei dieser direkten Neutralisation in Kontakt mit dem Neutralisationsmedium und können dadurch in ihren Eigenschaften verändert werden. Bereits geringe Menge von Ionen aus dem Neutralisationsmedium können die Eigenschaften der Partikel negativ beeinflussen. Ferner ist bei diesem Stand der Technik anschließend ein Abtrennen des Neutralisationsmediums von dem Kieselsol erforderlich.
Die Erfindung hat weiter erkannt, dass überraschender Weise das Lösungsmittel in hinreichendem Maße die flüchtigen Säuren aus der Metalloxiddispersion (bspw. dem Kieselsol) ausschleppt und damit der Neutralisation durch das Neutralisationsmedium zugänglich macht. Das Überführen des Lösungsmittels in die Gasphase und anschließende Kondensieren bewirkt, dass ausschließlich Lösungsmittel mit den Säuren ausgeschleppt wird und mit dem Neutralisationsmedium in Berührung kommt, während die Metalloxidpartikel in der flüssigen Phase (dem Destillationssumpf) verbleiben und somit vom Neutralisationsmedium fern gehalten werden.
Als Lösungsmittel kann Wasser oder ein organisches Lösungsmittel verwendet werden. Organische Lösungsmittel können polar oder unpolar sein. Die empirisch bestimmte und in Einheiten der sog. E_{T} (30) Skala ausgedrückte Polarität steigt bspw. vom apolaren n-Hexan über Toluol, Chloroform, Butanole, Aceton, Ethanol bis zum Formamid an. Als Beispiele für organische Lösungsmittel seien genannt Alkohole (Methanol, Ethanol, Propanole, Butanole, Octanole, Cyclohexanol), Glycole (Ethylenglycol, Diethylenglycol), Ether und Glycolether (Diethylether, Dibutylether, Anisol, Dioxan, Tetrahydrofuran, Mono-Di-Tri- und Polyethylenglycolether), Ketone (Aceton, Butanon, Cyclohexanon), Ester (Essigsäureester, Glycolester), Amide und andere Stickstoffverbindungen (Dimethylformamid, Piperidin, N-Methylpiperidon, Acetonitril), Schwefelverbindungen (Dimethylsulfoxid), Nitroverbindungen (Nitrobenzol), Halogenkohlenwasserstoffe (Dichlormethan, Chloroform, Tetrachlormethan, Tri- und Tetrachlorethan, 1,2-Dichlorethane, Chlorfluorkohlenwasserstoffe), Kohlenwasserstoffe (Benzine, Petrolether, Cyclohexan, Methylcyclohexan, Dekalin, Terpene, Benzol, Toluol, Xylole) und dergleichen. Mischungen dieser oder anderer Lösungsmittel können ebenfalls eingesetzt werden. Erfindungsgemäß handelt es sich um ein nicht mit Wasser mischbares organisches Lösungsmittel. Nicht mit Wasser mischbar bedeutet in diesem Zusammenhang, dass das Lösungsmittel im Rückfluss mit einem wässrigen Neutralisationsmedium in Kontakt gebracht werden kann, ohne dass dieses wässrige Neutralisationsmedium in nennenswerter Weise mit dem rückfließenden Lösungsmittel in die Metalloxiddispersion eingetragen wird.

Das Neutralisationsmedium kann im Rahmen der Erfindung ein Feststoff sein, beispielsweise ein geeignetes Salz oder ein Ionenaustauscher. Es kann sich ferner um eine bevorzugt nicht mit dem Lösungsmittel mischbare Flüssigkeit handeln.

Das erfindungsgemäße Verfahren erlaubt somit eine Neutralisation von in Lösungsmittel dispergierten Metalloxidpartikeln wie bspw. Siliciumdioxidpartikeln, ohne dass es zu Veränderungen der Partikel (insbesondere Anlagerungen von Ionen an der Oberfläche der Partikel) durch die Einwirkung des Neutralisationsmediums kommt). Aus einem erfindungsgemäß neutralisierten Kieselsol können beispielsweise Nanopartikelpulver hergestellt werden, die sich sehr einfach wieder in Lösungsmitteln redispergieren lassen. Ferner bleibt die Kompatibilität zu unpolaren Substraten (insbesondere unpolaren Polymermatrizes) erhalten und die Stabilität der aus den Siliciumdioxidpartikeln hergestellten Nanokomposite ist erhöht.

Die im Rahmen der Erfindung verwendeten Metalloxide sind Metalloxide der dritten und vierten Hauptgruppe des Periodensystems, Übergangsmetalloxide sowie Oxide der Lanthanoiden und Actinoiden. Bevorzugt sind SiO₂, TiO₂ und ZnO₂.

Bei der Metalloxiddispersion handelt es sich bevorzugt um eine kolloidale Dispersion. Dies bedeutet, dass die Metalloxidpartikel im Wesentlichen vereinzelt und damit nicht aggregiert und/oder agglomeriert vorliegen.

Bei dem Lösungsmittel kann es sich beispielsweise um einen Ester handeln. Die hydrolytische Spaltung von Estern wird sowohl durch Säuren als auch durch Basen katalysiert. Soll eine Metalloxiddispersion in einem Ester längerfristig gelagert werden, wird daher die Langzeitstabilität einer solchen Dispersion durch vorheriges Ausschleppen von Säuren durch das erfindungsgemäße Verfahren wesentlich erhöht. Eine weitere Möglichkeit ist die Verwendung einer erfindungsgemäß hergestellten lösungsmittelhaltigen Metalloxiddispersion bzw. eines aus einer solchen Dispersion durch Entfernen des Lösungsmittels herstellbaren redispergierbaren Metalloxidpulvers bei der Herstellung eines Polymerwerkstoffs. Dieser Polymerwerkstoff kann beispielsweise ausgewählt sein aus der Gruppe bestehend aus Polyestern, Polyamiden, Polyimiden, Polycarbonaten und Siliconen.
Polycarbonate sind thermoplastische Werkstoffe, bei denen auch Spuren von Basen (nicht erfindungsgemäß) unter Verarbeitungsbedingungen einen schnellen Abbau des Polymers bewirken und so die Materialeigenschaften negativ beeinflussen. Auch Polyester, Polyamide, Polyimide, Polyether, Polyetherketone, Poly(meth)acrylate und Polysulfone können empfindlich auf Säuren oder Basen reagieren.
Bei der Härtung von Siliconen mit Platinkatalysatoren können geringe Mengen basischer Amine (nicht erfindungsgemäß) als Katalysatorgift wirken. Säuren wie beispielsweise Salzsäure führen bereits bei 50° C innerhalb weniger Tage zur Equilibrierung der Siliconketten. Dies kann zum Abbau der Vernetzung und verkürzten Polymerketten führen. Die mechanischen Eigenschaften des Materials können negativ beeinflusst werden. Bei unvernetzten Siliconen kann es zur Reaktion der Polymerketten mit dem Metalloxidfüllstoff kommen, woraus eine Vergelung der Materialien resultiert.

Aus einer erfindungsgemäß hergestellten Metalloxiddispersion kann durch Entfernen des Lösungsmittels ein redispergierbares Pulver hergestellt werden. Dieses redispergierbare Pulver weist aufgrund der vor Entfernen des Lösungsmittels durchgeführten Neutralisierung eine weitgehend unpolare Oberfläche auf und besitzt daher eine hohe Kompatibilität mit unpolaren organischen Medien wie beispielsweise Monomeren, Oligomeren oder Präpolymeren. Besonders gilt dies für unpolare Dispergiermedien wie Silicone, Kohlenwasserstoffe, Polyolefine, unpolare Weichmacher und dergleichen. Die hohe Kompatibilität des redispergierbaren Pulvers mit diesen Medien führt zu einem verbesserten Fließverhalten (geringere Viskosität) und höherer Stabilität.

Ein Ausführungsbeispiel der Erfindung wird nachfolgend beschrieben.

### Beispiel 1

### Herstellung einer Siliciumdioxiddispersion in Toluol

In einem Dreihalskolben wurden 63 g Chlortrimethylsilan in 1260 g THF vorgelegt und unter intensivem Rühren 1050 g Kieselsol (Levasil 200/40%, BET=200 m²/g, 40% SiO₂, Na⁺ mit Ionentauscher entfernt) über einen Tropftrichter zugetropft.

Innerhalb einer Stunde hatten sich zwei Phasen gebildet, die in einem Scheidetrichter getrennt wurden. Die Unterphase enthielt mehr al 99 % des Feststoffs, während die Oberphase einen Großteil des Wassers enthielt. Die Unterphase wurde mit 140 g THF verdünnt und unter Rühren 63 g Chlortrimethylsilan dazu gegeben. Nach einer Stunde Rühren wurde in einen Scheidetrichter überführt.

Innerhalb von einer Stunde hatten sich wiederum zwei Phasen gebildet, die getrennt abgelassen wurden. Die Oberphase bestand hauptsächlich aus Wasser und THF.

Die Unterphase wurde in einen Dreihalskolben überführt und mit 400 g Toluol verdünnt. Dann wurde unter Zugabe von weiterem Toluol ein Gemisch aus THF, Wasser und Toluol abdestilliert. Die Zugabe des Toluols erfolgte so, dass die Lösung nicht trocken fällt. Es wurde destilliert bis die Siedetemperatur von Toluol annähernd erreicht war.

### Beispiel 2

### Erfindungsgemäße Neutralisation

Das in Beispiel 1 erhaltene, noch saure Toluol-Sol wurde unter Rückfluss erhitzt. Dabei strömte der Lösungsmitteldampf über ein Steigrohr seitlich in einen Kühler. Das kondensierte Lösungsmittel tropfte an dem Steigrohr vorbei und wurde über eine mit Natriumcarbonat gefüllte Säule geführt. Nach dem Überströmen eines Wasserabscheiders gelange es zurück in das Reaktionsgefäß. Nach sechs Stunden Rückfluss reagierte das Sol nicht mehr sauer.

### Vergleichsbeispiel 2 (nicht erfindungsgemäß)

Zu dem sauren Toluol-Sol aus Beispiel 1 wurden 30 g Natriumcarbonat gegeben und acht Stunden unter Rückfluss erhitzt. Anschließend wurde abgekühlt und die Suspension bei einer Zentrifugalbeschleunigung von 4500 g zentrifugiert. Anschließend wurde vom Bodensatz abdekantiert.

### Beispiel 3

Vergleich der Stabilität von mit Siliciumdioxidpartikeln gefüllten Kompositen.

Der Feststoffgehalt der Toluol-Sole aus Beispiel 2 und Vergleichsbeispiel 2 wird mit Hilfe einer Flüchtigkeitswaage bestimmt.
In einem 1 l Planschliffkolben werden 200 g Polymer VS 65.000 (Vinylterminiertes Polydimethylsiloxan, Hersteller Hanse Chemie AG, Viskosität 65 Pas (spezifiziert)) vorgelegt. Unter Rühren wird das Polydimethylsiloxan mit 200 g Toluol verdünnt. Anschließend wird unter Rühren so viel Toluol-Sol aus Beispiel 2 bzw. Vergleichsbeispiel 2 zugegeben, dass die Masse Feststoff aus dem Toluol-Sol (Siliciumdioxidpartikel) zu der Masse Polydimethylsiloxan (VS 65.000) im Verhältnis 30 zu 70 steht. Anschließend wird auf 90° C erhitzt und das Toluol im Vakuum abdestilliert.

Von den so hergestellten, nicht ausgehärteten Kompositen wird die Viskosität gemessen (Brookfield-Viskosimeter RVDV-II+ mit Spindel 42, 2,5 min⁻¹) und die Lagerstabilität bei 50° C wird bestimmt.

Die Viskosität des Komposits aus Beispiel 2 beträgt 207 Pas, die des Vergleichsbeispiels 2 ist höher und beträgt 245 Pas.
Das Komposit aus Beispiel 2 ist nach 8 Wochen Lagerung bei 50° C unverändert. Das Vergleichsbeispiel 2 vergelt innerhalb einer Woche bei einer Lagerung von 50° C und ist somit nicht lagerstabil.

### Beispiel 4 (nicht erfindungsgemäß)

100 g Levasil 200/40% wurden mit saurem Ionentauscher (Amberjet 1200 H, Rohm & Haas) entionisiert, mit 200 g Isopropanol verdünnt und 9,0 g Hexamethyldisilazan dazu gegeben. Dann wurde 2 h bei 70°C gerührt. Das Sol wurde anschließend unter Rückfluss so erhitzt, dass das aus dem Kühler zurückfließende Lösungsmittel über eine Säule, die mit einem sauren Ionentauscher (Amberjet 1200 H, Rohn&Haas) gefüllt ist, fließt. Nach 10 Stunden reagierte ein angefeuchtetes pH-Papier neutral auf das Sol: Es zeigt pH 7 an.

## Patentansprüche

1. Verfahren zum Entfernen saurer Verbindungen aus einer lösungsmittelhaltigen Metalloxiddispersion, **gekennzeichnet durch** folgende Schritte:
a) Überführen von Lösungsmittel in die Gasphase;
b) Kondensierenlassen des Lösungsmittels;
c) In Kontakt bringen des kondensierten Lösungsmittels mit einem Neutralisationsmedium, das räumlich von der Metalloxiddispersion getrennt ist;
d) Rückführen des kondensierten Lösungsmittels in die Metalloxiddispersion;
wobei das Lösungsmittel ein nicht mit Wasser mischbares organisches Lösungsmittel ist und das Metalloxid ausgewählt ist aus der Gruppe bestehend aus Metalloxiden der 3. und 4. Hauptgruppe, Übergangsmetalloxiden, Oxiden der Lanthanoiden und Actinoiden.

2. Verfahren nach Anspruch 1, **dadurch gekennzeichnet, dass** die lösungsmittelhaltige Metalloxiddispersion unter Rückfluss erhitzt wird.

3. Verfahren nach Anspruch 1, **dadurch gekennzeichnet, dass** das Neutralisationsmedium ein Feststoff ist.

4. Verfahren nach Anspruch 3, **dadurch gekennzeichnet, dass** das Neutralisationsmedium ein Salz enthält.

5. Verfahren nach Anspruch 3, **dadurch gekennzeichnet, dass** das Neutralisationsmedium einen Ionenaustauscher enthält.

6. Verfahren nach einem der Ansprüche 1 bis 2, **dadurch gekennzeichnet, dass** das Neutralisationsmedium eine nicht mit dem Lösungsmittel mischbare Flüssigkeit aufweist.

7. Verfahren nach einem der Ansprüche 1 bis 6, **dadurch gekennzeichnet, dass** das Metalloxid ausgewählt ist aus der Gruppe bestehend aus SiO₂, TiO₂ und ZnO₂.

8. Verfahren nach einem der Ansprüche 1 bis 7, **dadurch gekennzeichnet, dass** die Metalloxiddispersion eine kolloidale Dispersion ist.

9. Verfahren nach einem der Ansprüche 1 bis 8, **dadurch gekennzeichnet, dass** das Lösungsmittel ein aromatisches Lösungsmittel oder einen Ester umfasst.

10. Verfahren nach einem der Ansprüche 1 bis 9, **dadurch gekennzeichnet, dass** die lösungsmittelhaltige Metalloxiddispersion bei der Herstellung eines Polymerwerkstoffs verwendet wird.

11. Verfahren nach Anspruch 10, **dadurch gekennzeichnet, dass** der Polymerwerkstoff ausgewählt ist aus der Gruppe bestehend aus Polyestern, Polyamiden, Polyimiden, Polycarbonaten, Silikonen, Polyethern, Polyetherketonen, Poly(meth)acrylaten und Polysulfonen.

## Claims

1. Process for the removal of acidic compounds from a solvent-containing metal oxide dispersion, **characterized by** the following steps:
a) conversion of solvent to the gas phase;
b) allowing the solvent to condense;
c) bringing the condensed solvent into contact with a neutralization medium which has spatial separation from the metal oxide dispersion;
d) returning the condensed solvent to the metal oxide dispersion;
wherein the solvent is an organic solvent immiscible with water and the metal oxide has been selected from the group consisting of metal oxides of the 3rd and 4th main group, transition metal oxides, and oxides of the lanthanoids and actinoids.

2. Process according to Claim 1, **characterized in that** the solvent-containing metal oxide dispersion is heated at reflux.

3. Process according to Claim 1, **characterized in that** the neutralization medium is a solid.

4. Process according to Claim 3, **characterized in that** the neutralization medium comprises a salt.

5. Process according to Claim 3, **characterized in that** the neutralization medium comprises an ion exchanger.

6. Process according to any of Claims 1 to 2, **characterized in that** the neutralization medium comprises a liquid with which the solvent is immiscible.

7. Process according to any of Claims 1 to 6, **characterized in that** the metal oxide has been selected from the group consisting of SiO₂, TiO₂ and ZnO₂.

8. Process according to any of Claims 1 to 7, **characterized in that** the metal oxide dispersion is a colloidal dispersion.

9. Process according to any of Claims 1 to 8, **characterized in that** the solvent encompasses an aromatic solvent or encompasses an ester.

10. Process according to any of Claims 1 to 9, **characterized in that** the solvent-containing metal oxide dispersion is used in the production of a polymer material.

11. Process according to Claim 10, **characterized in that** the polymer material has been selected from the group consisting of polyesters, polyamides, polyimides, polycarbonates, silicones, polyethers, polyether ketones, poly(meth)acrylates, and polysulfones.

## Revendications

1. Procédé d'élimination de composés acides d'une dispersion d'oxyde métallique contenant un solvant, **caractérisé par** les étapes suivantes :
a) le transfert du solvant dans la phase gazeuse ;
b) la condensation du solvant ;
c) la mise en contact du solvant condensé avec un agent de neutralisation, qui est séparé dans l'espace de la dispersion d'oxyde métallique ;
d) le recyclage du solvant condensé dans la dispersion d'oxyde métallique ;
le solvant étant un solvant organique non miscible avec l'eau et l'oxyde métallique étant choisi dans le groupe constitué par les oxydes métalliques des groupes principaux 3 et 4, les oxydes de métaux de transition, les oxydes de lanthanides et d'actinides.

2. Procédé selon la revendication 1, **caractérisé en ce que** la dispersion d'oxyde métallique contenant un solvant est chauffée à reflux.

3. Procédé selon la revendication 1, **caractérisé en ce que** l'agent de neutralisation est un solide.

4. Procédé selon la revendication 3, **caractérisé en ce que** l'agent de neutralisation contient un sel.

5. Procédé selon la revendication 3, **caractérisé en ce que** l'agent de neutralisation contient un échangeur d'ions.

6. Procédé selon l'une quelconque des revendications 1 à 2, **caractérisé en ce que** l'agent de neutralisation comprend un liquide non miscible avec le solvant.

7. Procédé selon l'une quelconque des revendications 1 à 6, **caractérisé en ce que** l'oxyde métallique est choisi dans le groupe constitué par SiO₂, TiO₂ et ZenO₂.

8. Procédé selon l'une quelconque des revendications 1 à 7, **caractérisé en ce que** la dispersion d'oxyde métallique est une dispersion colloïdale.

9. Procédé selon l'une quelconque des revendications 1 à 8, **caractérisé en ce que** le solvant comprend un solvant aromatique ou un ester.

10. Procédé selon l'une quelconque des revendications 1 à 9, **caractérisé en ce que** la dispersion d'oxyde métallique contenant un solvant est utilisée lors de la fabrication d'un matériau polymère.

11. Procédé selon la revendication 10, **caractérisé en ce que** le matériau polymère est choisi dans le groupe constitué par les polyesters, les polyamides, les polyimides, les polycarbonates, les silicones, les polyéthers, les polyéther-cétones, les poly(méth)acrylates et les polysulfones.
